# FASCICULE DE BREVET EUROPEEN

(11) **EP 3 333 052 B1**
(45) Date de publication et mention de la délivrance du brevet: **30.12.2020**
(21) Numéro de dépôt: 17202529.8
(22) Date de dépôt: 20.11.2017
(51) Int. Cl.: B62D 25/14

(54) **FIXATION SIMPLIFIÉE DIRECTE D'UN JAMBAGE DE TRAVERSE DE POSTE DE CONDUITE DE VÉHICULE**
VEREINFACHTE DIREKTE BEFESTIGUNG EINES QUERTRÄGERS EINER FAHRERKABINE EINES KRAFTFAHRZEUGS
SIMPLIFIED DIRECT ATTACHMENT OF A CROSS-MEMBER OF A DRIVER'S COMPARTMENT OF A MOTOR VEHICLE

(30) Priorité: 09.12.2016 FR 1662192
(43) Date de publication de la demande: 13.06.2018
(73) Titulaire: RENAULT s.a.s., 92100 Boulogne-Billancourt (FR)
(72) Inventeur: FLANDIN, MICHAEL, 28410 BROUE (FR); PERREUX, PHILIPPE, 78620 L'ETANG LA VILLE (FR); DEMEULES, REMI, 78200 MANTES LA JOLIE (FR)

(56) Documents cités:
- DE-C1- 19 547 858
- FR-A1- 2 919 261
- FR-A1- 3 017 362
- FR-A3- 3 000 007
- US-A1- 2011 097 598

## Description

La présente invention concerne une traverse de poste de conduite d'un véhicule, dite aussi traverse de planche de bord, et comportant un élément métallique principal transversal, ou barre horizontale, et un jambage central destiné à se fixer sur le tunnel central du plancher du véhicule. Notamment, l'invention se rapporte à une fixation simplifiée d'un tel jambage.

Il y a de très nombreuses formes connues de traverses de poste de conduite. Le document FR 2 891 799 montre une telle traverse dans laquelle la barre horizontale est formée de deux tronçons de tubes métalliques de diamètre différent et la jambe de maintien est un profilé métallique.

Selon le document US 6 523 878, le jambage central est réalisé sous forme de deux jambes venant se fixer de part et d'autre du tunnel central, reliées par une barre horizontale, destinée à supporter les équipements de climatisation. Les éléments constituant le jambage central sont des profilés métalliques fixés, par exemple par soudage, à la barre horizontale transversale.

L'ensemble de la traverse avec ses deux éléments métalliques est relativement lourd et dans le cadre de l'allégement souhaité des véhicules, il serait souhaitable de trouver un moyen de rendre la traverse de poste de conduite plus légère sans diminuer sa résistance ni compliquer son implantation dans le véhicule.

Le document EP 2 233 385 A1 décrit ainsi une traverse hybride comportant une barre horizontale métallique sur laquelle les éléments constituants le jambage et d'autres éléments sont en matériau polymère surmoulé.

Le document FR 3 000 007 A1 décrit une traverse comportant une barre horizontale métallique à laquelle sont fixés les éléments constituants le jambage, ces derniers étant réalisés d'une pièce en matériau polymère moulé.

Le document FR 3 017 362 A1 décrit une autre traverse de fixation comportant une traverse métallique à laquelle sont fixés des éléments constituant des jambes. Ce document décrit une traverse de poste de conduite d'un véhicule selon le préambule de la revendication 1.

Il existe néanmoins toujours un besoin pour alléger la traverse et améliorer et simplifier la liaison entre le jambage et la barre horizontale métallique.

L'invention atteint cet objectif en proposant une traverse de poste de conduite d'un véhicule, comportant un élément métallique principal transversal et un jambage central destiné à être fixé au plancher du véhicule, le jambage étant une pièce unitaire comprenant deux jambes sensiblement perpendiculaires à une direction longitudinale de l'élément métallique principal transversal et au moins une barre de liaison entre les deux jambes, des moyens de fixation supérieurs et inférieurs étant prévus en haut et en bas du jambage pour le fixer respectivement à l'élément métallique principal et au plancher.

Selon l'invention, les moyens de fixation supérieurs comprennent, pour chaque jambe :
- une interface de fixation faisant partie d'une jambe et solidarisée à l'élément métallique principal transversal, ladite interface de fixation définissant une surface d'appui concave appliquée directement contre une partie de la paroi de l'élément métallique principal transversal et en épousant le contour.

La surface d'appui concave est en appui contre un quart supérieur arrière de l'élément métallique principal transversal, l'élément métallique principal transversal présentant une section transversale circulaire. Ladite interface de fixation présente en outre une surface d'appui plane en dessous de la surface d'appui concave et l'élément métallique principal transversal comporte une patte de fixation plane solidarisée à la surface d'appui plane de l'interface de fixation. De plus, l'interface de fixation comprend au moins un doigt d'indexation ménagé sur la surface d'appui plane coopérant avec un orifice d'indexation correspondant de la patte de fixation de l'élément métallique principal transversal.

Un tel agencement permet de réaliser une liaison simple et néanmoins robuste entre l'élément métallique principal transversal et le jambage, avec un nombre limité de pièces.

La traverse selon l'invention peut en outre présenter une ou plusieurs des caractéristiques suivantes :
- l'interface de fixation peut être solidarisée à l'élément métallique principal transversal par des vis ou des rivets, notamment suivant une unique direction de fixation.
- le jambage peut comprendre des zones de fixation destinées à recevoir en fixation au moins un élément fonctionnel, par exemple un groupe de gestion de la température de l'habitacle. Ces zones de fixation peuvent notamment être agencées pour permettre une fixation suivant une direction sensiblement horizontale dans la position d'utilisation de la traverse. De telles zones de fixation peuvent comprendre des surfaces planes percées pour la réception de vis ou rivets

De manière générale, le jambage est réalisé d'une pièce, de préférence en matériau moulé. Ce matériau peut être choisi parmi un polymère et du magnésium et tout autre alliage métallique léger présentant une résistance suffisante. Le jambage peut également être fait de ces deux matériaux (conception hybride), le matériau polymère pouvant par exemple être surmoulé sur le magnésium ou un alliage métallique léger.

D'autres caractéristiques et avantages de l'invention ressortiront de la description suivante d'un exemple de réalisation. Il sera fait référence aux dessins annexés, non limitatifs, sur lesquels :
- la figure 1 est une vue en perspective d'une traverse de planche de bord selon l'invention, avec son jambage central ;
- la figure 2 est une vue en perspective d'une fixation supérieure du jambage central de la figure 1 ;
- la figure 3 est une vue avant de la traverse de la figure 1, au niveau d'une fixation supérieure du jambage central ;
- la figure 4 est une vue en perspective avant d'une partie d'une fixation supérieure du jambage central de la figure 1 ;
- la figure 5 est une vue en perspective arrière de la traverse de la figure 1 sur laquelle est monté un groupe de gestion de la climatisation, avec deux vues de détail des fixations du jambage central au groupe de gestion.

Dans la présente description, les termes avant, arrière, supérieur, inférieur, font référence aux directions avant et arrière du véhicule, lorsque la traverse est montée sur le véhicule. Les axes X, Y, Z, correspondent respectivement à l'axe longitudinal (d'avant en arrière), transversal et vertical du véhicule.

Par sensiblement horizontal, longitudinal ou vertical, on entend une direction formant un angle d'au plus ±20°, voire d'au plus 10° ou d'au plus 5° avec une direction horizontale, longitudinale ou verticale.

Par sensiblement parallèle, perpendiculaire, on entend une direction/un angle s'écartant d'au plus ±20°, voire d'au plus 10° ou d'au plus 5° d'une direction parallèle, perpendiculaire.

La traverse 1 représentée comprend un élément métallique tubulaire transversal 2 (ou barre transversale) et un jambage central 3 constitué d'une pièce unitaire (réalisée d'une pièce), par exemple en plastique moulé. La pièce peut notamment être réalisée en résine mêlée de charges, par exemple sous forme particulaire ou de préférence sous forme de fibres. Elle peut également être en magnésium ou en plastique et magnésium ou alliage léger.

De manière connue en soi, l'élément métallique tubulaire transversal 2 est destiné à supporter divers accessoires, tel que par exemple un support de la colonne de direction. Il est constitué ici de deux tronçons tubulaires 2a, 2b de section différente, ici circulaire. L'invention n'est toutefois pas limitée à ce mode de réalisation, un unique tronçon pourrait être prévu et/ou une section non circulaire.

L'élément métallique tubulaire transversal 2 présente une direction longitudinale 4, laquelle s'étend sensiblement horizontalement dans la position de montage (d'utilisation) de la traverse 1.

Le jambage 3 comporte des jambes 5 sensiblement perpendiculaires à la direction longitudinale 4, ici sensiblement verticales et symétriques, et deux barres de liaison respectivement à mi-hauteur 6 et en position haute 7. La section basse des jambes 5 est ici sensiblement verticale, tandis que sa section supérieure s'évase un peu vers l'extérieur (direction Y et direction opposée à Y) et vers l'avant du véhicule (direction opposée à X).

La structure des jambes 5 et des barres de liaison 6, 7 du jambage 3 peut être tel que décrit dans le document FR 3 000 007 A1. Les jambes 5 peuvent ainsi être formées de plusieurs sections de profilés nervurés, formant un canal ouvert vers l'extérieur et défini par un fond 5a et des ailes 5b (ou nervures). Les barres de liaison 6, 7 peuvent également être en forme de canal à fond et ailes, ouvert vers l'avant du véhicule, et renforcé éventuellement par des voiles obliques s'étendant d'une aile à l'autre perpendiculairement au fond à l'intérieur du canal. La forme exacte de ces barres peut toutefois être déterminée par les éléments qui doivent être portés par ces barres, comme par exemple une commande de boîte de vitesse. Des vis peuvent être prévues à l'arrière du jambage pour permettre la fixation de ces divers éléments ou accessoires.

Des moyens de fixation supérieurs et inférieurs sont également prévus en haut et en bas du jambage 3 pour le fixer respectivement à l'élément métallique principal 2 et au plancher du véhicule (non représenté). Le haut des sections hautes des jambes 5 est ainsi pourvu de moyens de fixation supérieurs 8. Le bas des sections basses des jambes 5 est pourvu de moyens de fixation inférieurs 25, 26.

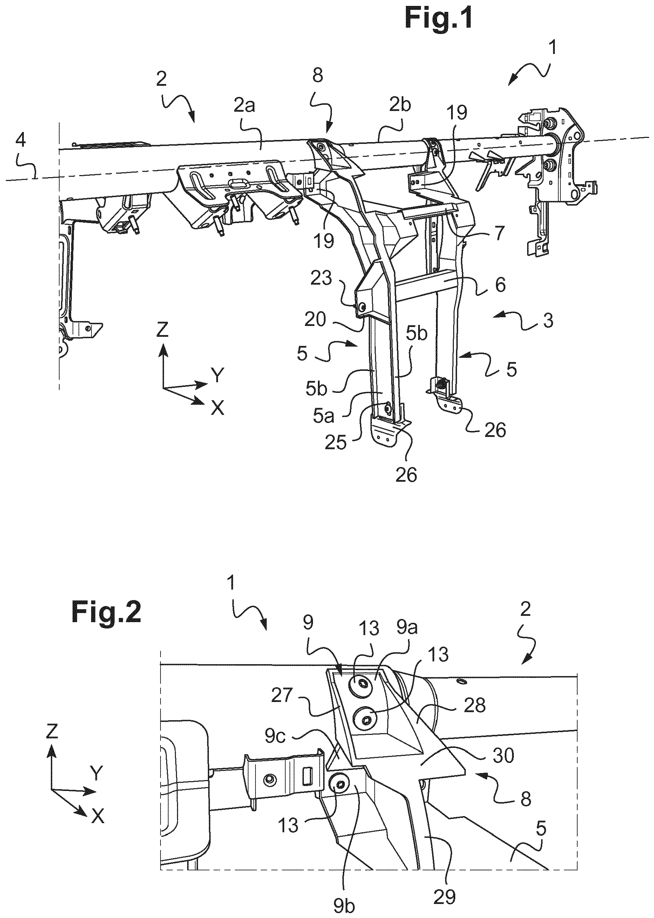

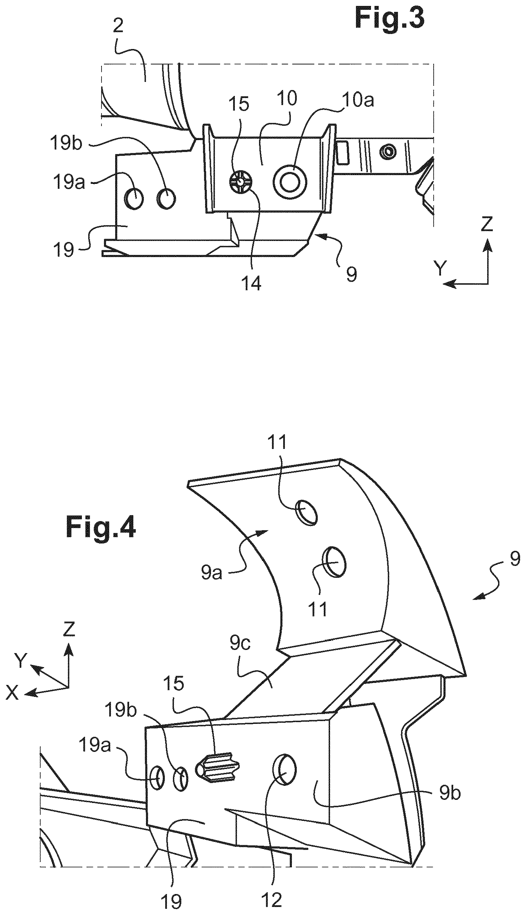

Les moyens de fixation supérieurs 8 comprennent, pour chaque jambe 5, une interface de fixation 9 faisant partie d'une jambe et solidarisée à l'élément métallique principal transversal 2. Cette interface de fixation définit une surface d'appui concave 9a appliquée directement (sans pièce intermédiaire) contre une partie de la paroi de l'élément métallique principal transversal 2 en épousant le contour de celui-ci, tel que visible sur les figures 2 et 4.

La surface d'appui concave 9a s'étend de préférence sur au plus la moitié de la périphérie de l'élément métallique principal transversal 2. De préférence, cette surface d'appui 9a peut s'étendre au moins sur un quart de cette périphérie. L'invention n'est toutefois pas limitée par une dimension particulière, pourvu que cette dimension soit suffisante pour permettre la fixation de la surface d'appui concave 9a à l'élément métallique principal transversal 2, par exemple au moyen de vis ou rivet.

Dans l'exemple représenté, la surface d'appui concave 9a est en appui contre un quart supérieur arrière de l'élément métallique principal 2.

En dessous de la surface d'appui concave 9a, l'interface de fixation 9 présente une surface d'appui plane 9b. Celle-ci s'étend sensiblement verticalement dans la position d'utilisation de la traverse 1. Dans l'exemple, elle est reliée à la surface d'appui concave 9a par une paroi plane 9c, sensiblement tangente à la paroi de l'élément métallique principal 2. Cette paroi plane 9c peut servir de renfort.

La surface d'appui plane 9b est fixée à une patte de fixation plane 10, solidaire de l'élément métallique principal 2. Cette patte de fixation plane 10 est de préférence une plaque métallique fixée par soudage.

L'interface de fixation 9 est fixée à l'élément métallique principal 2 par des vis ou des rivets, tel que décrit ci-après en référence aux figures 2 à 4. A cet effet, la surface d'appui concave 9a est percée d'au moins un orifice, ici deux orifices 11, disposés l'un en dessous de l'autre. La surface d'appui plane 9b est également percée d'un orifice 12 correspondant avec un orifice 10a de la patte de fixation 10. Ces orifices 11, 12 permettent le passage de rivets ou vis 13, par exemple des vis autotaraudeuses.

L'interface de fixation 9 est en outre pourvue d'un élément d'indexation mâle/femelle 15 coopérant avec un élément d'indexation correspondant de l'élément métallique principal transversal 2. Cet élément d'indexation 15 est ici un doigt en saillie, lequel coopère avec un orifice 14 de la patte de fixation plane 10 (figure 3). Cet élément d'indexation 15, ménagé ici sur la surface d'appui plane 9b, participe au prémaintien du jambage 3 et de l'élément métallique principal transversal 2.

Bien entendu, le doigt 15 pourrait faire partie de la patte de fixation plane 10, il est toutefois plus simple de le réaliser sur le jambage 3 par moulage. L'invention n'est pas limitée non plus par un nombre particulier de ces éléments d'indexation, ni par leur position.

Le jambage 3 comprend également des zones de fixation destinées à recevoir en fixation un élément fonctionnel 18, par exemple ici un groupe HVAC (acronyme de l'anglais « heating, ventilation and air-conditioning »), autrement dit un groupe de gestion du chauffage, de la ventilation et de la climatisation.

Dans l'exemple représenté, quatre zones de fixation 19, 20 sont prévues, deux zones de fixation haute 19 et deux zones de fixation basse 20. Ces zones de fixation 19, 20 sont agencées de manière à permettre une fixation de l'élément fonctionnel 18 suivant une unique direction de fixation, correspondant ici sensiblement à l'axe longitudinal X du véhicule.

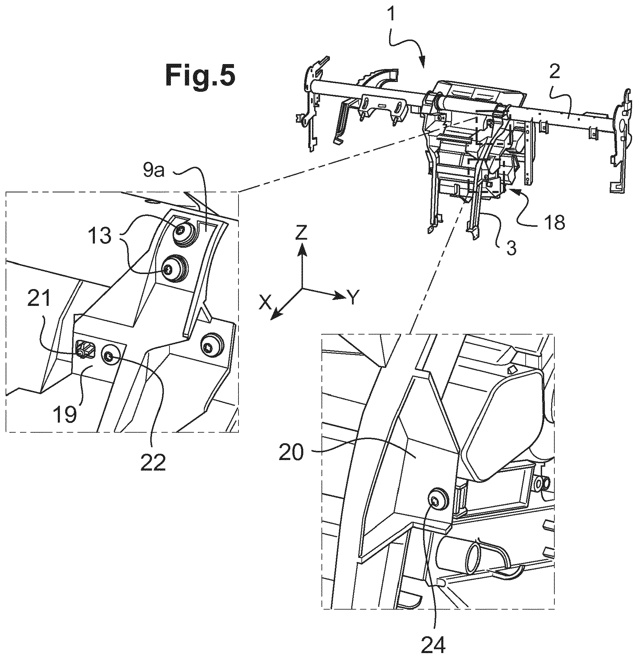

Tel que visible sur la figure 4 et sur les détails de la figure 5, chaque zone de fixation haute 19 est formée d'une paroi plane percée deux orifices 19a, 19b recevant respectivement un pion de centrage 21 solidaire de l'élément fonctionnel 18 et une vis 22. La zone de fixation 19 est ici située sensiblement à la même hauteur que la surface d'appui plane 9b, facilitant sa réalisation, notamment par moulage (voir figure 4).

Les zones de fixation basse 20 sont chacune formées d'une paroi plane percée d'un orifice 23 (fig.1) pour le passage d'une vis 24.

Bien entendu, l'invention n'est pas limitée par la forme, le nombre et la nature des zones de fixation, pourvu qu'elles permettent d'assurer une fixation de l'élément fonctionnel 18 au jambage 3. A noter que le jambage 3 pourrait présenter des zones de fixation pour la fixation de plusieurs éléments fonctionnels.

Les moyens de fixation inférieurs du jambage 3 comprennent ici des trous 25 à l'extrémité inférieure de chaque jambe 5 pour le vissage sur des pièces de liaison 26 métalliques elles-mêmes fixées de part et d'autre du tunnel central du plancher du véhicule (non représenté). Ces trous 25 peuvent comprendre des écrous sertis pour faciliter la fixation des pattes. En variante, le bas des sections basses des jambes pourraient être directement fixées de part et d'autre du tunnel central.

L'interface de fixation 9 forme ainsi l'extrémité supérieure d'une jambe 5. On notera que les doigts 15 peuvent être réalisés par moulage sans mouvement particulier de l'outil. En outre, il est possible de réaliser des nervures de renfort 27, 28, 29 parallèles les unes aux autres, sensiblement verticales (figure 2), ces nervures pouvant être disposées de part et d'autre de la surface d'appui concave 9a (nervures 27, 28) et entre la surface d'appui plane 9b et la zone de fixation supérieure 19 (nervure 29). Pour une plus grande robustesse, ces nervures 27, 28, 29 sont reliées par une nervure horizontale 30.

L'invention permet de réaliser une interface jambage / élément métallique principal transversal offrant une bonne tenue mécanique. Le montage des différentes pièces est en outre simple et, dans l'exemple décrit, toutes les fixations sont accessibles pour l'opérateur en restant du même côté de la traverse poste de conduite.

## Revendications

1. Traverse (1) de poste de conduite d'un véhicule, comportant un élément métallique principal transversal (2) et un jambage central (3) destiné à être fixé au plancher du véhicule, le jambage (3) étant une pièce unitaire comprenant deux jambes (5) sensiblement perpendiculaires à une direction longitudinale de l'élément métallique principal transversal (2) et au moins une barre de liaison (6, 7) entre les deux jambes (5), des moyens de fixation supérieurs et inférieurs étant prévus en haut et en bas du jambage (3) pour le fixer respectivement à l'élément métallique principal (2) et au plancher, les moyens de fixation supérieurs (8) comprenant, pour chaque jambe :
- une interface de fixation (9) faisant partie d'une jambe (5) en formant l'extrémité supérieure de cette dernière et solidarisée à l'élément métallique principal transversal (2), ladite interface de fixation (9) définissant une surface d'appui concave (9a) appliquée directement contre une partie de la paroi de l'élément métallique principal transversal (2) et en épousant le contour, **caractérisé en ce que** la surface d'appui concave (9a) est en appui contre un quart supérieur arrière de l'élément métallique principal transversal (2), l'élément métallique principal transversal (2) présentant une section transversale circulaire, ladite interface de fixation (9) présentant en outre une surface d'appui plane (9b) en dessous de la surface d'appui concave (9a) et l'élément métallique principal transversal (2) comporte une patte de fixation plane (10) solidarisée à la surface d'appui plane (9b) de l'interface de fixation, l'interface de fixation (9) comprenant au moins un doigt d'indexation (15) ménagé sur la surface d'appui plane (9b) coopérant avec un orifice d'indexation (14) correspondant de la patte de fixation (10) de l'élément métallique principal transversal (2).

2. Traverse (1) selon la revendication 1, **caractérisée en ce que** l'interface de fixation (9) est solidarisée à l'élément métallique principal transversal (2) par des vis ou des rivets (13).

3. Traverse (1) selon l'une quelconque des revendications 1 ou 2, **caractérisée en ce que** le jambage (3) comprend des zones de fixation (19, 20) destinées à recevoir en fixation au moins un élément fonctionnel (18).

4. Traverse (1) selon l'une quelconque des revendications 1 à 3, **caractérisée en ce que** le jambage (3) est en un matériau moulé choisi parmi un polymère, du magnésium et leur association.

## Patentansprüche

1. Querträger (1) für die Fahrerkabine eines Fahrzeugs, umfassend ein quer verlaufendes Hauptelement (2) aus Metall und einen Mittelpfosten (3), der dazu bestimmt ist, am Boden des Fahrzeugs befestigt zu sein, wobei der Schenkel (3) ein einstückiges Teil ist, das zwei zu einer Längsrichtung des quer verlaufenden Hauptelements (2) aus Metall senkrechte Schenkel (5) und zumindest eine Verbindungsstange (6, 7) zwischen den beiden Schenkeln (5) umfasst, wobei oben und unten am Schenkel (3) obere bzw. untere Befestigungsmittel vorgesehen sind, um ihn am Hauptelement (2) aus Metall bzw. am Boden zu befestigen, wobei die oberen Befestigungsmittel (8) für jeden Schenkel Folgendes umfassen:
- eine Befestigungsschnittstelle (9), die Teil eines Schenkels (5) ist, indem sie dessen oberes Ende ausbildet, und fest mit dem quer verlaufenden Hauptelement (2) aus Metall verbunden ist, wobei die Befestigungsschnittstelle (9) eine konkave Auflagefläche (9a) ausbildet, die direkt gegen einen Teil der Wand des quer verlaufenden Hauptelements (2) aus Metall anliegt und sich an dessen Kontur anpasst, **dadurch gekennzeichnet, dass** die konkave Auflagefläche (9a) gegen ein oberes hinteres Viertel des quer verlaufenden Hauptelements (2) aus Metall anliegt, wobei das quer verlaufende Hauptelement (2) aus Metall einen kreisförmigen Querschnitt aufweist, wobei die Befestigungsschnittstelle (9) ferner eine ebene Fläche (9b) unterhalb der konkaven Auflagefläche (9a) aufweist und das quer verlaufende Hauptelement (2) aus Metall eine ebene Befestigungslasche (10) aufweist, die fest mit der ebenen Auflagefläche (9b) der Befestigungsschnittstelle verbunden ist, wobei die Befestigungsschnittstelle (9) zumindest einen Anzeigefinger (15) umfasst, der an der ebenen Auflagefläche (9b) vorgesehen ist und mit einer entsprechenden Anzeigeöffnung (14) der Befestigungslasche (10) des quer verlaufenden Hauptelements (2) aus Metall zusammenwirkt.

2. Querträger (1) nach Anspruch 1, **dadurch gekennzeichnet, dass** die Befestigungsschnittstelle (9) durch Schrauben oder Niete (13) fest mit dem quer verlaufenden Hauptelement (2) aus Metall verbunden ist.

3. Querträger (1) nach einem der Ansprüche 1 oder 2, **dadurch gekennzeichnet, dass** der Schenkel (3) Befestigungsbereiche (19, 20) umfasst, die dazu bestimmt sind, zumindest ein Funktionselement (18) in befestigender Weise aufzunehmen.

4. Querträger (1) nach einem der Ansprüche 1 bis 3, **dadurch gekennzeichnet, dass** der Schenkel (3) aus einem geformten Material besteht, das aus einem Polymer, Magnesium und Viertel deren Kombination ausgewählt ist.

## Claims

1. Crossmember (1) for a driver's compartment of a vehicle, comprising a transverse main metal element (2) and a central pillar (3) intended to be fastened to the floor of the vehicle, the pillar (3) being a unitary part comprising two legs (5) substantially perpendicular to a longitudinal direction of the transverse main metal element (2), and at least one connecting bar (6, 7) between the two legs (5), upper and lower fastening means being provided at the top and bottom of the pillar (3) in order to respectively fasten it to the main metal element (2) and to the floor, the upper fastening means (8) comprising, for each leg:
- a fastening interface (9) forming part of a leg (5) by forming the upper end thereof and being secured to the transverse main metal element (2), said fastening interface (9) defining a concave bearing surface (9a) applied directly against a part of the wall of the transverse main metal element (2) and hugging the contour thereof, **characterized in that** the concave bearing surface (9a) bears against a rear upper quarter of the transverse main metal element (2), the transverse main metal element (2) having a circular cross section, said fastening interface (9) additionally having a planar bearing surface (9b) below the concave bearing surface (9a), and the transverse main metal element (2) comprises a planar fastening lug (10) secured to the planar bearing surface (9b) of the fastening interface, the fastening interface (9) comprising at least one indexing finger (15) formed on the planar bearing surface (9b) and cooperating with a corresponding indexing orifice (14) of the fastening lug (10) of the transverse main metal element (2).

2. Crossmember (1) according to Claim 1, **characterized in that** the fastening interface (9) is secured to the transverse main metal element (2) by means of screws or rivets (13).

3. Crossmember (1) according to either one of Claims 1 and 2, **characterized in that** the pillar (3) comprises fastening regions (19, 20) intended to receive fastened thereto at least one functional element (18).

4. Crossmember (1) according to any one of Claims 1 to 3, **characterized in that** the pillar (3) is a moulded material chosen among a polymer, magnesium and a combination thereof.
